# EUROPEAN PATENT SPECIFICATION

(11) **EP 1 752 938 B1**
(45) Date of publication and mention of the grant of the patent: **10.02.2010**
(21) Application number: 05425529.4
(22) Date of filing: 22.07.2005
(51) Int. Cl.: G07F 13/06, G07F 9/10, A47J 31/00

(54) **Polyfunctional frame for machines for producing espresso coffee**
Mehrzweckrahmen fur Geräte zum Produzieren von Espresso-Kaffee
Bâti polyfonctionnel de machines pour la production de café expresso

(43) Date of publication of application: 14.02.2007
(73) Proprietor: Gruppo Cimbali S.p.A., 20082 Binasco (MI) (IT)
(72) Inventor: Beretta, Maurizio, I-20082 Binasco (MI) (IT)
(74) Representative: Perani, Aurelio

(56) References cited:
- EP-A- 0 288 414
- CH-A5- 682 798
- US-A- 4 757 753

## Description

The present invention relates to a multifunctional frame for machines for producing espresso coffee, having a base wall, two opposing side walls, an upper cover and a front wall with a plurality of filter-holder assemblies for producing the espresso coffee to be dispensed into containers which are provided with a predetermined height, the frame comprising a substantially quadrilateral base structure for supporting a horizontal ledge for supporting the containers, two vertical structures which are connected to the base structure at two opposing sides, in order to constitute the side walls of the machine, the opposing vertical structures being able to support the base wall of the machine as well as at least one beam which is provided with seats for supporting the filter-holder assemblies for dispensing the espresso coffee and members for connection to the opposing vertical structures.

Such machines having relevant frames are widely known in the specific sector. Given recent developments in terms of consumption of espresso coffee, however, it has been found that the known frames for constructing the machines have limitations which have substantial effects on the production of the machines and therefore the cost thereof.

As is known, the spread of espresso coffee machines to increasingly extensive areas of the world characterized by diverse coffee-drinking cultures has resulted in the definition of a wide variety of methods of preparing espresso. The extremes of those different preparations range, for example, from the use of small cups for Neapolitan espresso, which are on average from 5 to 6 cm tall, up to the use of large American beakers which contain 10 fluid ounces, equal to approximately 300 cubic cm, and which can be even taller than 15 cm.

In order that, from one extreme to the other, each type of beverage is prepared with the maximum degree of quality, it is necessary, during the process of extracting the beverage from the coffee grounds, for different measures to be taken. These have resulted in the development, for espresso coffee machines, of a large number of specific technical and structural solutions.

One requirement in terms of quality, for example, is to obtain maximum homogeneity for the texture of the creamy layer of an Italian espresso coffee and to preserve, as far as possible, the thermal conditions thereof.

To that end, it is advantageous for the ceramic cup, into which the coffee has to be dispensed and which is preheated to the correct temperature, to be located at the smallest distance possible from the dispensing spout of the filter-holder. Therefore, espresso coffee machines which are intended for Mediterranean markets are characterized by dispensing spouts which are positioned at heights which may be from 70 to 90 mm from the support plane of the cup.

Conversely, in an espresso coffee machine intended for the North American market, in order to be able to receive the large cardboard or polystyrene containers measuring more than 300 cubic cm, the dispensing spouts must be positioned approximately 160 mm away from the support plane of the containers. In order to position the dispensing assemblies in a very high position at the front side of the machine, it was necessary, in accordance with the prior art, to construct machines having a raised frame structure with respect to the product intended for the European market, with resultant lengthening of parts of the body in addition. In fact, in accordance with the prior art, it was necessary to construct two substantially different machines.

In more recent years, in the sector of espresso coffee machines, there has further been developed a device for heating and automatically whipping the milk for cappuccinos, which allows large volumes of product to be prepared. In order to contain those large volumes of whipped milk, very tall pots are required, for the use of which the structure of the North American coffee machine is advantageous. That characteristic could also be very useful for Mediterranean markets, but conflicts with the shorter structure of typical machines for those markets.

The machine described in US0288414 is an example of a coffee machine which is able to deal with cups of varying size. However an adjustable height for the filter-holder *assembly is foreseen as the way to facilitate the use of differerent sized cups.*

The problem addressed by the present invention is to provide a frame for espresso coffee machines that meets the requirement of allowing the construction of machines having the features peculiar to the North American market, that is to say, which can adequately be used for large containers and, at the same time, machines for the European market which can be used for small containers with the possibility of using body parts which are identical for both types of machine.

Another object of the invention is also to allow, in machines of the European type, the fitting and use of a device for heating and whipping the milk in order to make cappuccino of the type which allows a large volume of product to be prepared and therefore pots of substantial height to be used.

The problem is solved by a frame which is characterized in accordance with claim 1 below.

The invention will now be described in greater detail with reference to one practical embodiment thereof which is given purely by way of non-limiting example and with reference to the appended drawings, in which:
Figure 1 is a perspective view of the frame in accordance with the invention;

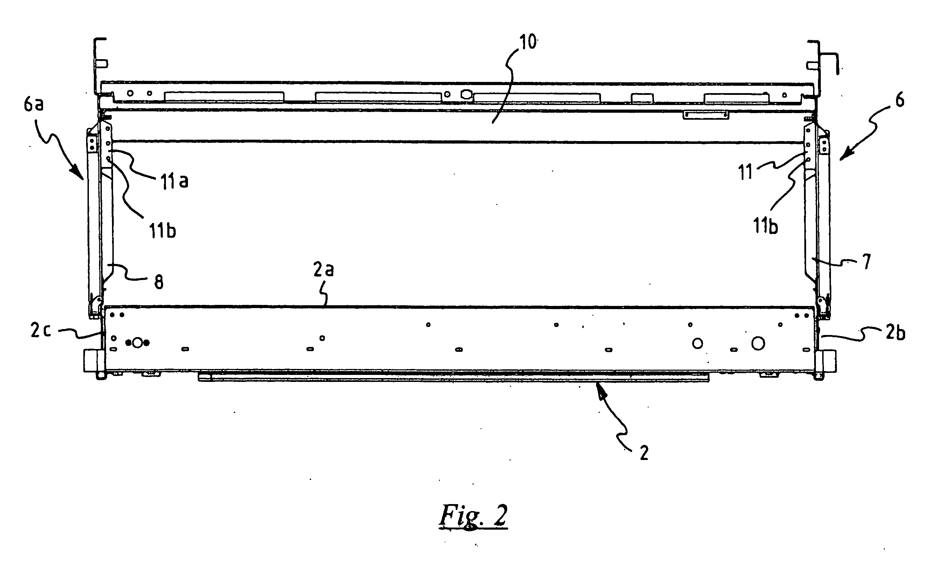

Figure 2 is a front view of the same frame of Figure 1;
Figure 3 is a perspective view of a beam for supporting the filter-holder assemblies which is suitable for the construction of an espresso coffee machine for Mediterranean markets;
Figure 4 is a perspective view of a beam for supporting the filter-holder assemblies suitable for constructing an espresso coffee machine for North American markets;

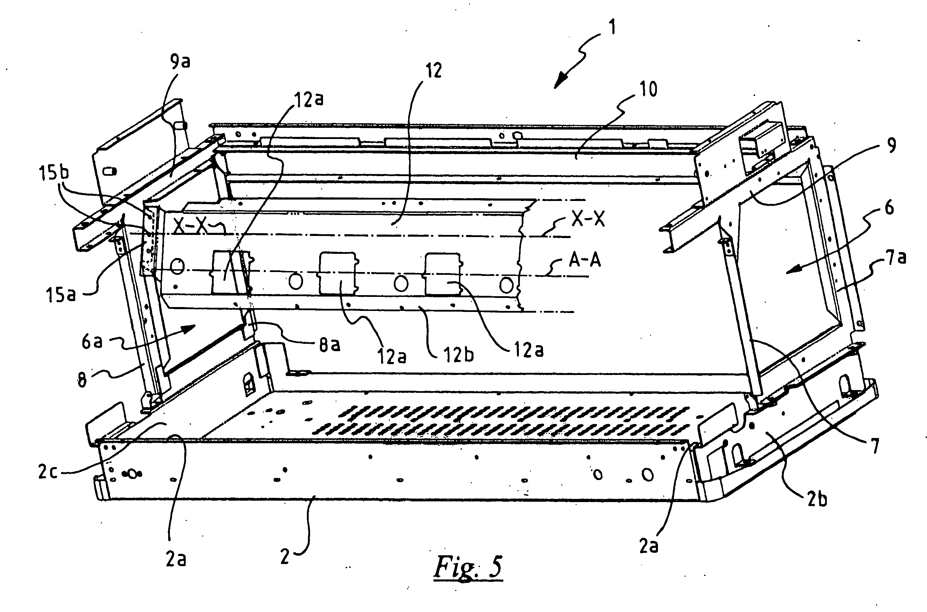

Figure 5 is a perspective view of the frame of Figure 1 equipped with a beam for supporting the filter-holder assemblies of Figure 3;

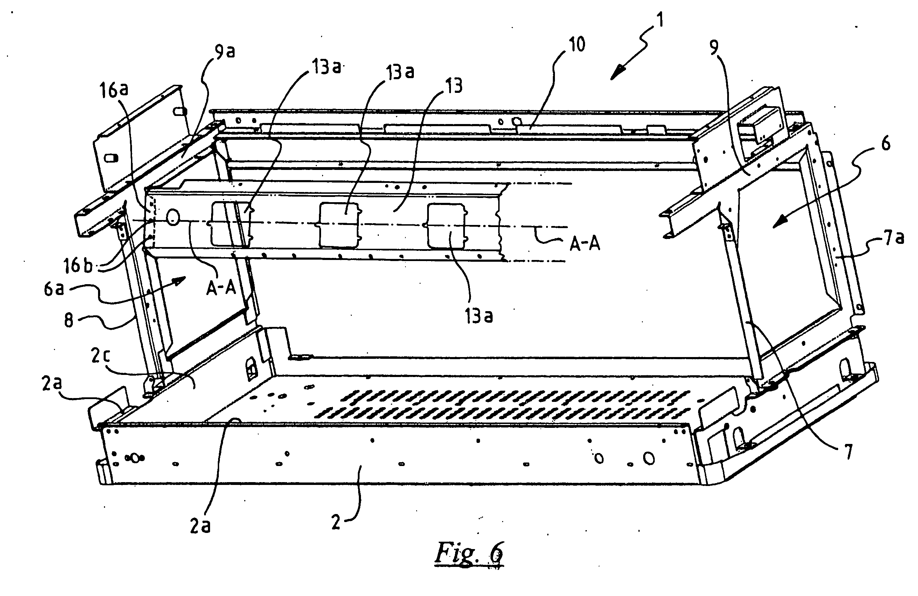

Figure 6 is a perspective view of the frame of Figure 1 equipped with a beam for supporting the filter-holder assemblies of Figure 4;
Figure 7 is a perspective view of an espresso coffee machine of the type intended for Mediterranean markets, which machine is brought about with the frame in accordance with the invention;
Figure 8 is a front view of the machine of Figure 7;
Figure 9 is a perspective view of an espresso coffee machine of the type intended for North American markets, which machine is brought about with the frame in accordance with the invention;
Figure 10 is a front view of the machine of Figure 9.

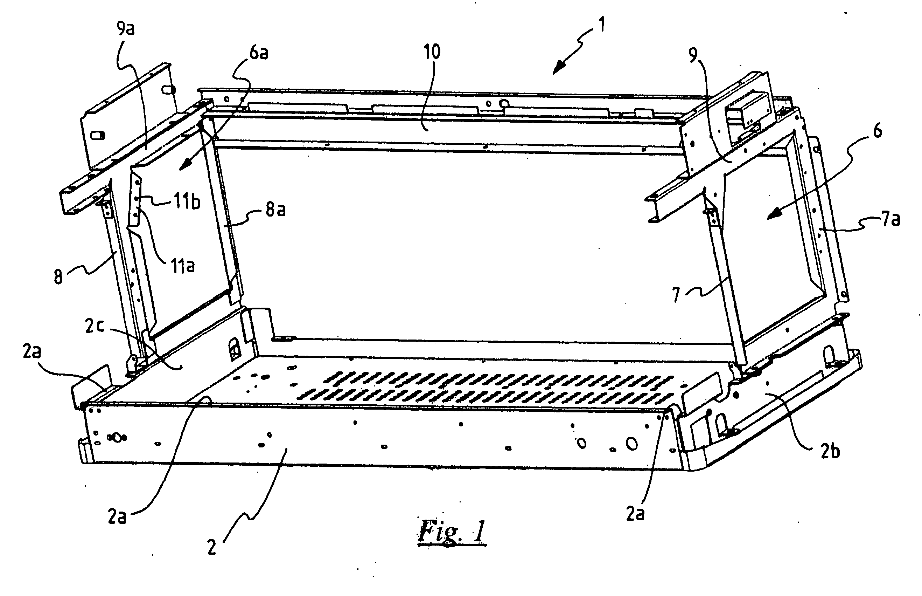

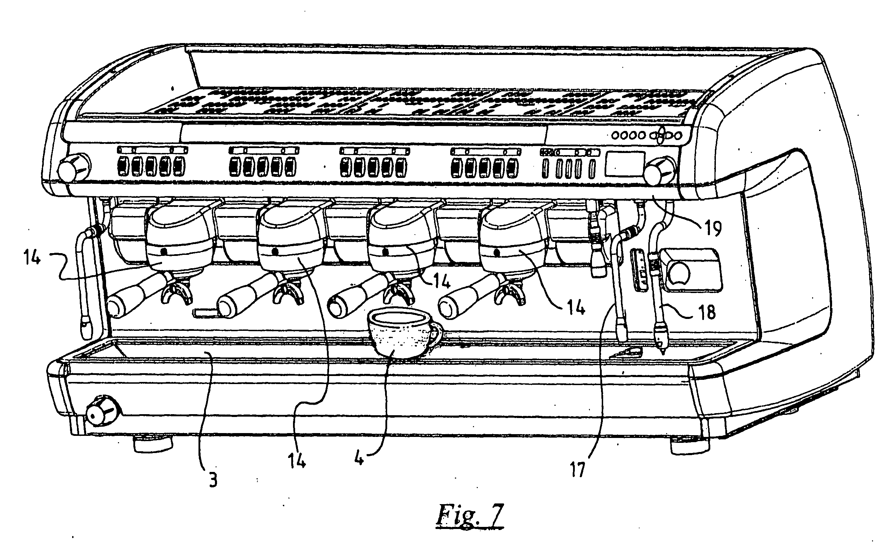

With reference to the above-mentioned Figures, and in particular Figure 1, the multifunctional frame according to the invention is generally designated 1. It comprises a substantially quadrilateral, box-shaped base structure 2 whose upper edges 2a define the support for the horizontal ledge 3 (Figures 7, 8, 9, 10) for supporting the containers, into which the coffee is dispensed.

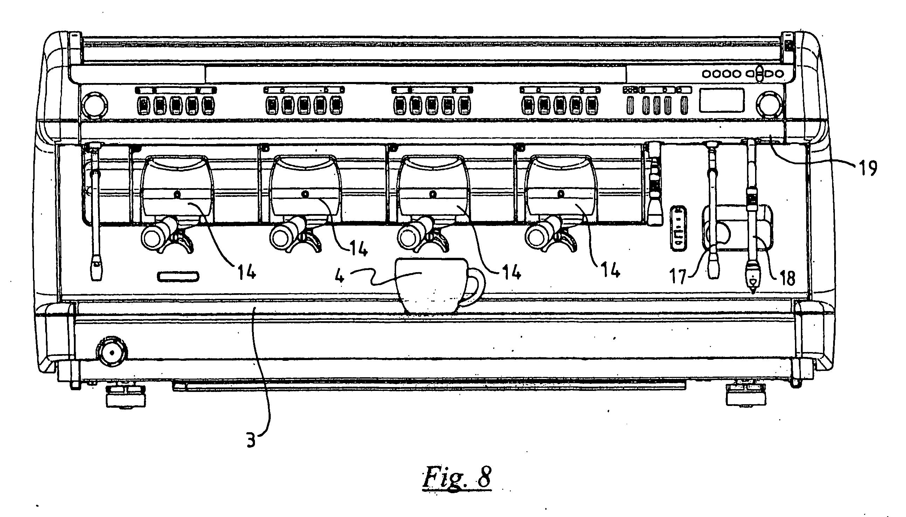

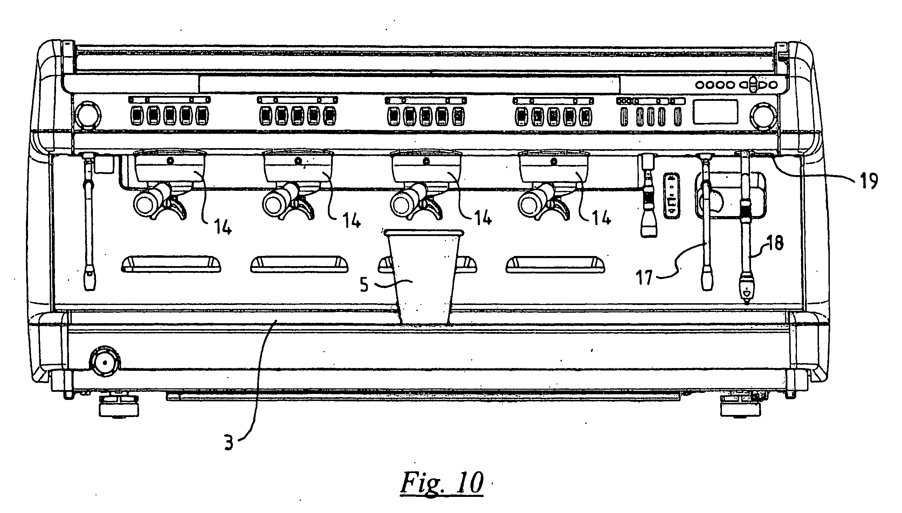

Those containers are constituted by a typical ceramic cup 4, of the Mediterranean type, as schematically illustrated in Figure 8, or by a large beaker-type container 5, measuring 300 cubic cm, of the North American type, as schematically illustrated in Figure 10.

The frame 1 comprises the lateral vertical structures 6 and 6a which are connected to the base structure 2 at the opposing sides 2b and 2c of that base structure.

Each of the vertical structures 6, 6a comprises a respective pair of vertical uprights 7, 7a and 8, 8a and a respective upper crosspiece 9, 9a which connects the uprights themselves. Another beam-like structure which is generally designated 10 connects the vertical structures 6 and 6a to each other in the region of the upper ends of the uprights 7a and 8a, co-operating to form the structure of the frame 1. The uprights 7 and 8 of the opposing vertical structures 6, 6a are provided with means, designated 11 and 11 a, for horizontally positioning a beam which is intended to support the filter-holder assemblies for dispensing the coffee.

The positioning means 11 of the upright 7 and the positioning means 11a of the upright 8 are horizontally aligned with each other and are vertically positioned, with respect to the base structure 2, with predetermined spacing for the purposes which will become clear from the remainder of the description.

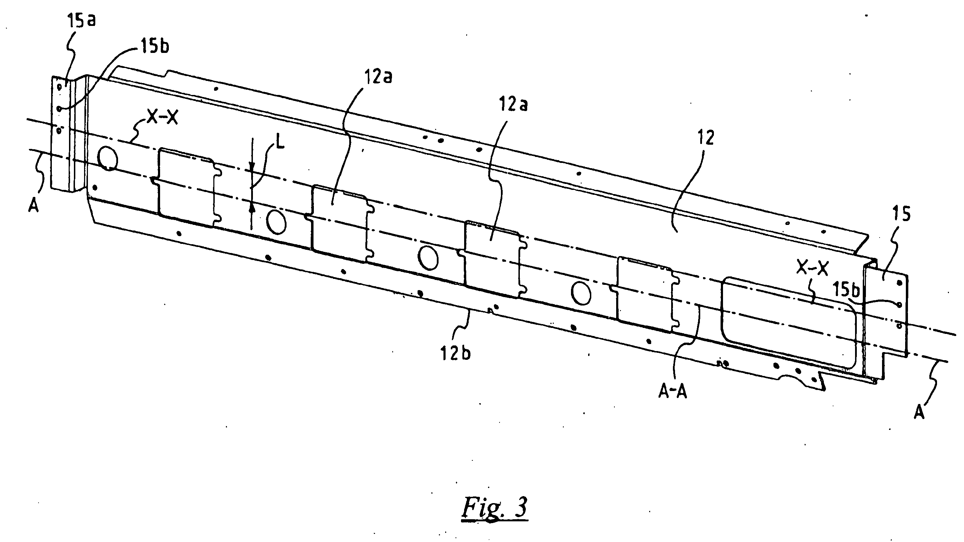

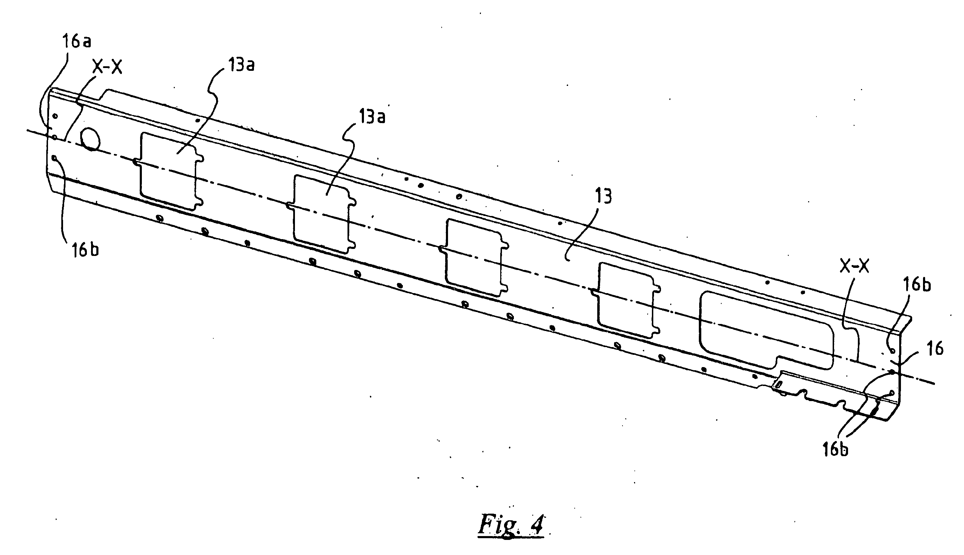

In a first version, the beam is designated 12 in Figure 3 and, in a second version, is designated 13 in Figure 4.

The beams 12 and 13 are both provided with respective seats 12a and 13a which are intended to accommodate and support the same number of conventional filter-holder assemblies 14, for dispensing the coffee, as illustrated in Figures 7, 8, 9, 10.

As is visible in Figure 3, the seats 12a are orientated along a longitudinal axis A-A which is parallel with longitudinal axis X-X of the same beam extending through the central region of the ends 15, 15a thereof which, when the beam is mounted on the frame, engage with the positioning means 11 and 11a thereof.

That axis A-A is displaced with respect to the axis X-X by a distance L towards the edge 12b of the beam that is directed towards the base structure 2.

As is visible in Figure 4, however, the seats 13a for the filter-holder assemblies of the beam 13 are horizontally orientated along axis X-X of the beam itself which, when mounted on the frame 1, extends through the central region of the ends 16, 16a which engage with the same positioning means 11, 11 a of the frame 1.

The positioning means 11 and 11 a, in the embodiment illustrated in the drawings, are constituted by bent portions of the metal sheet from which the uprights 7 and 8 of the opposing vertical structures 6 and 6a are produced. In particular, those bent sheet metal portions are positioned at an angle relative to the vertical plane, to which the front uprights 7 and 8 of the opposing vertical structures 6, 6a belong.

The ends 15, 15a of the beam 12 and the ends 16, 16a of the beam 13 are provided with through-holes 15b and 16b which, when the beam 12 or the beam 13 is positioned on the frame, correspond to the holes 11b which are provided in the sheet metal portions 11, 11a which constitute the positioning means.

Those holes are intended to receive conventional threaded members for anchoring the beams 12 or 13 to the frame 1.

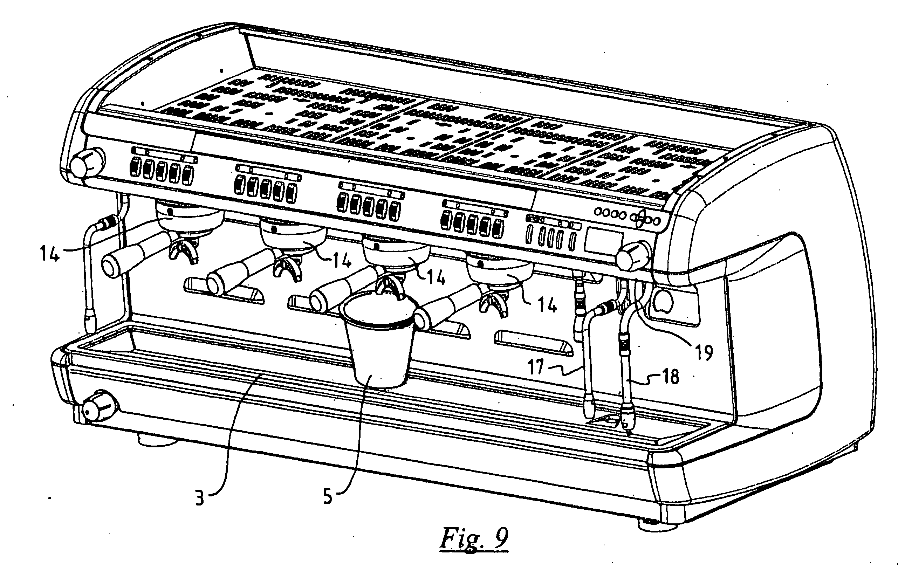

From the above description, it will be appreciated that the frame 1 according to the invention allows the construction of machines for producing espresso coffee of the Mediterranean type, as illustrated in Figures 7 and 8, or of the North American type, as illustrated in Figures 9 and 10, by fitting a different beam 12 or 13 for supporting the filter-holder assemblies 14.

The positioning means 11, 11a on the uprights 7, 8 of the frame always remain the same, as do the anchoring members of the beams.

The different position of orientation of the seats 12a or 13a on the respective beams 12 and 13, with respect to the longitudinal axis X-X of each beam extending through the central point of the positioning means 11, 11 a of the ends of the beams themselves, determines the positioning of the filter-holder assemblies 14 so as to be nearer the support plane 3 of the containers, as in the version of the machine for Mediterranean markets, or so as to be further away from that plane, as in the version of the machine for North American markets.

All this is effected without any dimensional modifications to the overall structure of the frame 1, which therefore allows the use of machine body walls which are identical for both types of machine, with substantial savings both in terms of manufacturing and maintenance, as well as for storing pieces.

Finally, since the structure of the frame 1 has dimensions in accordance with the machine of the North American type, it is possible to fit to the same frame, even when provided with a beam 12 for a machine of the Mediterranean type, an assembly for heating and whipping the milk for cappuccino which allows the preparation of large volumes of product, whose dispensing nozzles schematically designated 17 and 18 always project, in both types of machine, from an upper wall 19 which is positioned, relative to the support plane 3 of the containers, at a high level independent of that of the filter-holder assemblies 14 for dispensing the coffee.

## Claims

1. A multifunctional frame (1) for machines for producing espresso coffee, having a base wall, two opposing side walls, an upper cover and a front wall with a plurality of filter-holder assemblies (14) for producing the espresso coffee to be dispensed into containers (4, 5) which are provided with a predetermined height, the frame comprising a substantially quadrilateral base structure (2) for supporting a horizontal ledge (3) for supporting the containers (4, 5), two vertical structures (6, 6a) which are connected to the base structure at two opposing sides (2b, 2c), in order to constitute the side walls of the machine, the opposing vertical structures (6, 6a) being able to support the base wall of the machine as well as at least one beam (12, 13) which is provided with seats (12a, 13a) for supporting the filter-holder assemblies (14) for dispensing the espresso coffee and members (15b, 16b) for connection to the opposing vertical structures, **characterized in that** each of the opposing vertical structures (6, 6a) comprises a respective pair of vertical uprights (7, 7a, 8, 8a) and a respective upper cross-piece (9, 9a) which connects the uprights themselves, the uprights (7, 8) of the pairs of uprights which are located at the side of the front wall of the machine each being provided with positioning means (11, 11a) and anchoring means for the ends (15, 15a, 16, 16a) of the beam (12, 13) for supporting the filter-holder assemblies (14), the positioning means and the anchoring means of an upright (7) being horizontally aligned with the corresponding means of the other upright (8), the positioning means of both uprights (7, 8) being positioned vertically with respect to the base structure (2) with spacing so as to cause the filter-holder assemblies (14) which are carried by the beam (12, 13) to be in a predetermined position relative to the horizontal ledge (3) for supporting the containers (4, 5), into which the coffee is dispensed, in accordance with the position of the filter-holder assemblies (14) on the beam.

2. A multifunctional frame according to claim 1, **characterized in that** the filter-holder assemblies (14) are distributed on the beam (13) so as to be orientated in the longitudinal extent thereof and substantially along the longitudinal axis X-X of the beam which, when it is mounted on the frame (1), extends through the central region of the positioning means (11, 11a).

3. A multifunctional frame according to claim 1, **characterized in that** the filter-holder assemblies (14) are distributed on the beam (12) so as to be orientated in the longitudinal extent thereof and substantially along an axis (A-A) which is parallel with longitudinal axis (X-X) which, when the beam is mounted on the frame (1), extends through the central region of the positioning means (11, 11a), the axis (A-A) being displaced with respect to the longitudinal axis (X-X) towards the edge (12b) of the beam (12) that is directed towards the support plane (3) of the containers.

4. A multifunctional frame according to claims 1 to 3, **characterized in that** the uprights (7, 7a, 8, 8a) and the cross-piece (9, 9a) of the opposing vertical structures (6, 6a) are formed from bent sheet metal.

5. A multifunctional frame according to claims 1 to 4, **characterized in that** the positioning means (11, 11a) of the beams (12, 13) on the uprights are constituted by bent portions of the metal sheet from which the uprights (7, 8) are formed.

6. A multifunctional frame according to claims 1 to 5, **characterized in that** the sheet metal portions which constitute the positioning means (11, 11a) of the ends (15, 15a, 16, 16a) of the beams (12, 13) for supporting the filter-holders (14) are arranged in planes at an angle relative to the vertical plane, to which the front uprights (7, 8) of the opposing vertical structures (6,6a) belong.

7. A multifunctional frame according to claims 1 to 6, **characterized in that** the means for anchoring the beams on the uprights (7, 8) are constituted by holes (11b, 15b, 16b) which are carried by the positioning means (11, 11a) and by the ends (15, 15a, 16, 16a) of the beams (12, 13) as well as by threaded members which engage with the holes.

## Patentansprüche

1. Mehrzweckrahmen (1) für Maschinen zum Zubereiten von Espresso mit einer Basis, zwei einander gegenüberstehenden Seitenwänden, einer oberen Abdeckung und einer Frontwand mit einer Mehrzahl von Filterhalteranordnungen (14) zum Zubereiten von Espresso, der in Behälter (4, 5) abgegeben werden soll, die auf einer vorgegebenen Höhe bereitgestellt werden, wobei der Rahmen eine im wesentlichen viereckige Basisstruktur (2) zum Stützen einer horizontalen Leiste (3) zum Stützen der Behälter (4, 5), zwei vertikale Strukturen (6, 6a), die mit der Basisstruktur an zwei einander gegenüberliegenden Seiten (2b, 2c) verbunden sind, um die Seitenwände der Maschine zu bilden, wobei die einander gegenüberliegenden Strukturen vertikale (6, 6a) in der Lage sind, die Basis der Maschine und mindestens einen Balken (12, 13) zu stützen, der mit Aufnahmen (12a, 13a) zum Haltern der Filterhalteranordnungen (14) zum Abgeben von Espresso und mit Elementen (15b, 16b) zum Verbinden der einander gegenüberliegenden vertikalen Strukturen ausgestattet ist,
**dadurch gekennzeichnet,**
**daß** jede der einander gegenüberliegenden vertikalen Strukturen (6, 6a) ein zugehöriges Paar von vertikalen Pfosten (7, 7a, 8, 8a) und ein zugehöriges oberes Querstück (9, 9a) umfaßt, das die Pfosten miteinander verbindet, wobei die Pfosten (7, 8) der Pfostenpaare, die auf der Seite der Frontwand der Maschine angeordnet sind, jeweils mit Positionierungsmitteln (11, 11a) und Befestigungsmitteln für die Enden (15, 15a, 16, 16a) des Balkens (12, 13) zum Haltern der Filterhalterordnungen (14) ausgestattet sind, wobei die Positionierungsmittel und die Befestigungsmittel eines Pfostens (7) mit den entsprechenden Mitteln des anderen Pfostens (8) horizontal ausgerichtet sind, wobei die Positionierungsmittel beider Pfosten (7, 8) bezüglich der Basisstruktur (2) vertikal mit einem Abstand angeordnet sind, so daß bewirkt wird, daß sich die Filterhalteranordnung (14), welche von dem Balken (12, 13) gehaltert werden, in einer vorgegebenen Position relativ zu der horizontalen Leiste (3) zum Stützen der Behälter (4, 5), in welche der Kaffee abgegeben wird, in Übereinstimmung mit der Position der Filterhalteranordnungen (14) auf dem Balken befinden.

2. Mehrzweckrahmen nach Anspruch 1, **dadurch gekennzeichnet, daß** die Filterhalteranordnungen (14) auf dem Balken (13) so verteilt sind, daß sie in dessen Längsausdehnung und im wesentlichen entlang der Längsachse (X-X) des Balkens orientiert sind, welche sich, wenn er an dem Rahmen (1) befestigt ist, durch den zentralen Bereich der Positionierungsmittel (11, 11a) erstreckt.

3. Mehrzweckrahmen nach Anspruch 1, **dadurch gekennzeichnet, daß** die Filterhalteranordnungen (14) auf dem Balken (13) so verteilt sind, daß sie in dessen Längsausdehnung und im wesentlichen entlang einer Achse (A-A) orientiert sind, die parallel zu der Längsachse (X-X) verläuft, die sich, wenn der Balken an dem Rahmen (1) befestigt ist, durch den zentralen Bereich der Positionierungsmittel (11, 11a) erstreckt, wobei die Achse (A-A) bezüglich der Längsachse (X-X) in Richtung der Kante (12b) des Balkens (12), welcher der Stützebene (3) der Behälter zugewandt ist, verschoben ist.

4. Mehrzweckrahmen nach den Ansprüchen 1 bis 3, **dadurch gekennzeichnet, daß** die Pfosten (7, 7a, 8, 8a) und das Querstück (9, 9a) der einander gegenüberliegenden vertikalen Strukturen (6, 6a) aus gebogenem Metallblech ausgebildet sind.

5. Mehrzweckrahmen nach den Ansprüche 1 bis 4, **dadurch gekennzeichnet, daß** die Positionierungsmittel (11, 11a) der Balken (12, 13) auf den Pfosten von gebogenen Abschnitten des Metallbleches, aus welchem die Pfosten (7, 8) ausgebildet sind, gebildet werden.

6. Mehrzweckrahmen nach einem der Ansprüche 1 bis 5, **dadurch gekennzeichnet, daß** die Metallblechabschnitte, die die Positionierungsmittel (11, 11a) der Enden (15, 15a, 16, 16a) der Balken (12, 13) zum Haltern der Filterhalteranordnung (14) bilden, in Ebenen mit einem Winkel relativ zu der vertikalen Ebene angeordnet sind, zu der die vorderen Pfosten (7, 8) der einander gegenüberliegenden vertikalen Strukturen (6, 6a) gehören.

7. Mehrzweckrahmen nach einem der Ansprüche 1 bis 6, **dadurch gekennzeichnet, daß** die Mittel zur Befestigung der Balken an den Pfosten (7, 8) von Öffnungen (11 b, 15b, 16b), die von den Positionierungsmitteln (11, 11a) und den Enden (15, 15a, 16, 16a) der Balken (12, 13) getragen werden, und von Gewindeelementen gebildet werden, die in die Öffnungen eingreifen.

## Revendications

1. Cadre multifonctions (1) pour des machines de préparation de café expresso, avec une paroi de base, deux parois latérales mutuellement opposées, un couvercle supérieur et une paroi frontale avec une pluralité d'aménagements porte-filtres (14) pour la préparation de café expresso destiné à être distribué dans des récipients (4, 5) qui sont mis à disposition sur une hauteur prédéfinie, le cadre comportant une structure de base sensiblement carrée (2) pour supporter une baguette horizontale (3) pour supporter les récipients (4, 5), deux structures verticales (6, 6a) qui sont reliées à la structure de base sur deux côtés (2b, 2c) mutuellement opposés, pour former les parois latérales de la machine, les structures verticales (6, 6a) mutuellement opposées étant aptes à supporter la paroi de base de la machine et au moins une barre (12, 13), qui est équipée de logements (12a, 13a) pour maintenir les aménagements porte-filtres (14) pour la distribution de café expresso et des éléments (15b, 16b) pour relier les structures verticales mutuellement opposées,
**caractérisé en ce que**
chacune des structures verticales (6, 6a) mutuellement opposées comprend une paire associée de montants verticaux (7, 7a, 8, 8a) et une pièce de traverse supérieure (9, 9a) associée, qui relie les montants l'un à l'autre, les montants (7, 8) des paires de montants qui sont disposés sur le côté de la paroi frontale de la machine étant équipés chacun de moyens de positionnement (11, 11a) et de moyens de fixation pour les extrémités (15, 15a, 16, 16a) de la barre (12, 13) pour porter les aménagements porte-filtres (14), les moyens de positionnement et les moyens de fixation d'un montant (7) étant orientés à l'horizontale avec les moyens correspondants de l'autre montant (8), les moyens de positionnement des deux montants (7, 8) étant disposés à la verticale, avec un écart par rapport à la structure de base (2), de sorte à obtenir que les aménagements porte-filtres (14) qui sont maintenus par la barre (12, 13) se trouvent dans une position prédéfinie par rapport à la baguette horizontale (3) pour supporter les récipients (4, 5) dans lesquels le café est distribué, en concordance avec la position des aménagements porte-filtres (14) sur la barre.

2. Cadre multifonctions selon la revendication 1, **caractérisé en ce que** les aménagements porte-filtres (14) sont distribués sur la barre (13) de sorte à être orientés dans l'extension longitudinale de cette dernière et sensiblement le long de l'axe longitudinal (X-X) de la barre, qui lorsqu'elle est fixée au cadre (1) s'étend à travers la zone centrale des moyens de positionnement (11, 11a).

3. Cadre multifonctions selon la revendication 1, **caractérisé en ce que** les aménagements porte-filtres (14) sont distribués sur la barre (13) de sorte à être orientés dans l'extension longitudinale de cette dernière et sensiblement le long d'un axe (A-A) qui s'écoule à la parallèle de l'axe longitudinal (X-X) qui lorsque la barre est fixée au cadre (1) s'étend à travers la zone centrale des moyens de positionnement (11, 11a), l'axe (A-A) étant décalé par rapport à l'axe longitudinal (X-X) en direction de l'arête (12b) de la barre (12) qui fait face au plan de support (3) des récipients.

4. Cadre multifonctions selon les revendications 1 à 3, **caractérisé en ce que** les montants (7, 7a, 8, 8a) et la pièce de traverse (9, 9a) des structures verticales (6, 6a) mutuellement opposées sont réalisés en tôle métallique cintrée.

5. Cadre multifonctions selon les revendications 1 à 4, **caractérisée en ce qu'**on forme les moyens de positionnement (11, 11a) des barres (12, 13) sur les montants de parties cintrées de la tôle métallique dans laquelle sont réalisés les montants (7, 8).

6. Cadre multifonctions selon l'une quelconque des revendications 1 à 5, **caractérisé en ce que** les parties en tôle métallique qui forment les moyens de positionnement (11, 11a) des extrémités (15, 15a, 16, 16a) des barres (12, 13) pour maintenir les aménagements porte-filtres (14) sont disposés dans des plans avec un angle par rapport au plan vertical dont font partie les montants avant (7, 8) des structures verticales (6, 6a) mutuellement opposées.

7. Cadre multifonctions selon l'une quelconque des revendications 1 à 6, **caractérisé en ce que** les moyens de fixation des barres sur les montants (7, 8) sont formés par des orifices (11b, 15b, 16b) qui sont portés par les moyens de positionnement (11, 11 a) et les extrémités (15, 15a, 16, 16a) des barres (12, 13) et par des éléments filetés qui s'engagent dans les orifices.
